# EUROPÄISCHE PATENTSCHRIFT

(11) **EP 4 031 810 B1**
(45) Veröffentlichungstag und Bekanntmachung des Hinweises auf die Patenterteilung: **27.11.2024**
(21) Anmeldenummer: 20780920.3
(22) Anmeldetag: 07.09.2020
(51) Int. Cl.: F22B 37/26, F22B 37/32

(54) **DAMPFERZEUGERFLÜSSIGKEITSABSCHEIDER UND VERFAHREN ZU DESSEN HERSTELLUNG**
STEAM BOILER LIQUID SEPARATOR AND METHOD FOR THE PRODUCTION THEREOF
SÉPARATEUR DE LIQUIDE DE GÉNÉRATEUR DE VAPEUR ET PROCÉDÉ POUR LE FABRIQUER

(30) Priorität: 17.09.2019 DE 102019006567
(43) Veröffentlichungstag der Anmeldung: 27.07.2022
(73) Patentinhaber: Westinghouse Electric Germany GmbH, 68167 Mannheim (DE)
(72) Erfinder: VANDAMME, François, 7190 Ecaussinne (BE); KROES, Albertus, 1401 Baulers (BE)
(74) Vertreter: Eickmeyer, Dietmar
(86) Internationale Anmeldenummer: PCT/EP2020/000152
(87) Internationale Veröffentlichungsnummer: WO 2021/052616

(56) Entgegenhaltungen:
- EP-A1- 1 584 367
- EP-A1- 1 645 344
- EP-A1- 3 527 710
- EP-A2- 0 744 758
- EP-B1- 0 546 739
- EP-B1- 0 849 521
- EP-B1- 2 467 540
- CH-A5- 687 923
- DE-A1- 102016 211 580
- DE-A1- 102017 107 345
- DE-A1- 2 613 880
- DE-A1- 2 634 523
- DE-A1- 2 651 456
- DE-A1- 2 940 761
- DE-A1- 4 332 045
- DE-A1- 4 431 234
- DE-B- 1 051 929
- DE-B2- 2 125 990
- DE-C- 305 619
- DE-C2- 4 332 483
- DE-T5- 112011 103 553
- US-A- 4 629 481
- US-A1- 2007 201 604
- US-A1- 2015 206 606

## Beschreibung

Die Erfindung betrifft einen Dampferzeugerflüssigkeitsabscheider für einen vertikal mit Kühlmedium durchströmten Dampferzeuger, wobei eine Anzahl von Drallblechen um eine Achse in einem Rohrstück angeordnet ist, wobei jedes Drallblech mit der Achse und dem Rohrstück verbunden ist, wobei die Drallbleche so geformt sind, dass ein Dampfstrom durch das Rohrstück zusätzlich zu seiner Längsbewegung durch das Rohrstück in eine Rotationsbewegung versetzt ist. Die Erfindung betrifft auch ein Verfahren zur Herstellung eines Dampferzeugerflüssigkeitsabscheiders.

Flüssigkeitsabscheider werden in einer Vielzahl von Bauformen in der Industrie verwendet. Eine Bauform, die insbesondere in Dampferzeugern, beispielsweise in der Prozessindustrie, der chemischen Industrie oder in Kernkraftwerken, für verschiedene Flüssigkeiten eingesetzt wird, ist dabei in geodätischer Richtung gesehen vertikal mit einem Kühlmedium durchströmt. Während das Kühlmedium von unten in den Dampferzeuger zuströmt, ist es in der Regel noch vollständig im flüssigen Aggregatszustand. Im Zuge der Wärmeaufnahme des Kühlmediums tritt dieses nach und nach in den dampfförmigen Zustand über. In einem Bereich, in dem das Kühlmedium dann vollständig in den dampfförmigen Aggregatzustand übergegangen sein sollte, kann es trotzdem vorkommen, dass der Dampf noch Flüssigkeit oder Flüssigkeitströpfchen mit sich führt. Diese werden dann durch Flüssigkeitsabscheider aus dem Dampf entfernt, sodass sich die Dampfqualität insgesamt verbessert.

Es ist allgemein bekannt, dass in bestimmten Kernkraftwerken durch einen nuklearen Kernbrennstoff Wasser erhitzt wird und in einem ersten Kreislauf, dem sogenannten Primärkreis umgepumpt wird. Als Wärmesenke im Primärkreislauf werden in der Regel mehrere Dampferzeuger in paralleler Anordnung eingesetzt, die einerseits vom Wasser des Primärkreises durchströmt werden, andererseits von einem Kühlmedium, in der Regel ebenfalls Wasser, durchströmt und derart der Primärkreis gekühlt wird. Häufig sind solche Wärmetauscher vertikal angeordnet, d.h. das Wasser des Sekundär- bzw. Kühlkreislaufs strömt - in geodätischer beziehungsweise Richtung seiner Aufstellung gesehen - von unten zunächst in einen ersten Bereich des Dampferzeugers ein, der durch einen Rohrboden begrenzt ist. Dieser Rohrboden ist mit einem zweiten Rohrboden durch eine Vielzahl von vertikal angeordneten Rohren verbunden, so dass das Wasser aus dem ersten Bereich in den Rohren in Richtung eines zweiten Bereichs im Dampferzeuger fließt. Die Vielzahl von Rohre ist vom Wasser des Primärkreislaufs umströmt und erhitzt derart das Kühlmedium Wasser des Sekundärkreislaufes. Dabei ist der Dampferzeuger so ausgelegt, dass das Wasser im Bereich der Rohre in die Dampfphase übergeht und so als Dampf in den zweiten Bereich des Wärmetauschers gelangt.

Dabei kann es vorkommen, dass das Wasser des Sekundärkreislaufs nicht vollständig in die Dampfphase übergeht, sondern als Nassdampf in den zweiten Bereich des Dampferzeugers, also eines Wärmetauschers, gelangt. Zur Verbesserung der Qualität des Dampfes ist es gewünscht, dass der Dampf möglichst keine Wasseranteile enthält, wenn er den Dampferzeuger verlässt und in der Regel zu einer Dampfturbine geleitet wird. Diese Qualitätsverbesserung wird beispielsweise dadurch erreicht, dass im zweiten Bereich ein Flüssigkeitsabscheider, nämlich ein Wasserabscheider, angeordnet ist. Häufig ist als Bauform ein so genannter Zyklonabscheider gewählt, der nach dem Fliehkraftprinzip arbeitet, der auch mehrstufig ausgestaltet sein kann.

Im Falle eines Dampferzeugers für Kernkraftwerke, der vertikal angeordnet ist, sieht eine Bauart einen zweistufigen Wasserabscheider vor, der im oberen Bereich des Dampferzeugers zwischen einem oberen Rohrboden und dem oberen Auslass, nämlich dem Dampfauslass des Dampferzeugers beziehungsweise Wärmetauschers angeordnet ist.

Die zweite Stufe des zweistufigen Wasserabscheiders weist eine Anzahl von vertikal angeordneten Röhren, die einen Durchmesser haben, der groß genug ist eine erste Stufe des Wasserabscheiders aufzunehmen, der selbst wiederum ein Flüssigkeitsabscheider bzw. Wasserabscheider ist. Die erste Stufe des Wasserabscheiders weist dabei mehrere gebogene Bleche auf, die in die Röhren eingeschweißt sind. Ausführungsbeispiele für solche Flüssigkeitsabscheider zeigen die Patentdokumente US 4,629,481, US 2015/0206606 A1 und US 2007/0201604 A1. Die Bleche zwingen den durch die Röhren strömenden Dampf in eine wendelförmige Strömung, also eine Strömung mit einem Strömungsanteil in Längsrichtung der Röhren sowie einen rotierenden Strömungsanteil, also einen Strömungsanteil, der um eine gedachte Mittelachse einer Röhre rotiert. Die Strömung bewirkt so, dass die dann auf die im Dampf enthaltenen Wassertröpfchen beziehungsweise das enthaltene Wasser wirkenden Fliehkräfte die Tröpfchen bzw. das Wasser an den Rand der Röhre zwingen und in der zweiten Stufe in den Bereich mit flüssigem Kühlmedium, nämlich Wasser zurückgeführt werden bzw. wird. Dazu sind beispielsweise oberhalb der ersten Stufe Lochbleche angeordnet, die das Wasser durch die Löcher lassen, während der Dampf im Dampferzeugerdom verbleibt. Oder dazu sind konzentrische Rohre oberhalb der ersten Stufe angeordnet, in denen sich das Wasser sammelt und dann in den Bereich mit flüssigem Kühlmedium, nämlich Wasser zurückgeführt wird. Auf diese Weise ist der verbleibende Dampf von seinen Wasseranteilen befreit und die Dampfqualität erhöht.

Durch den Betrieb des Dampferzeugers erfahren unter anderem die gebogenen Bleche, die üblicherweise aus Kohlenstoffstahl (schwarzem Stahl) im Laufe der Zeit durch die sogenannte strömungsindizierte Korrosion (FAC Flow Assisted Corrosion oder auch Flow Accelerated Corrosion) einen Verschleiß, so dass die Bleche zumindest in bestimmten Bereichen oder Stellen dünner werden, also eine Erosion erleiden. Bei Erreichen eines bestimmten Verschleißzustandes müssen die Bleche dann in der Regel im Zuge von Reparatur- oder Wartungsarbeiten vor Ort im Dampferzeuger ausgetauscht werden. Dazu ist es heute üblich, dass Arbeiter durch ein Mannloch in den betreffenden Bereich des Dampferzeugers einsteigen, die verschlissenen Bleche beispielsweise mit einem Trennverfahren aus den Rohren herausschneiden, heraustrennen oder heraussägen. Anschließend werden neue gebogene Bleche an die vorgesehene Stelle an der Rohrwand der ersten Stufe des Wasserabscheiders zunächst mit Schweißpunkten angeheftet, gegebenenfalls wiederholt ausgerichtet, bis die gewünschte Form und Position der Bleche erreicht ist sowie anschließend mit einer Schweißnaht fest mit der Rohrwand verbunden.

Nachteilig an dem Stand der Technik ist, dass der Austausch vergleichsweise zeitaufwendig ist. Zudem ist es schwierig die neuen Bleche an die exakt richtige geometrische Position zu schweißen, so dass die gebogenen Bleche ihren maximalen physikalischen Wasserabscheidungseffekt erzielen können. Zudem besteht das Risiko einer Deformation der Bleche beim freihändigen Verschweißen der Bleche mit einer Schweißnaht an die Rohrwand.

Ausgehend von diesem Stand der Technik ist es Aufgabe der Erfindung, einen Dampferzeugerflüssigkeitsabscheider anzugeben, welcher vergleichsweise schnell herstellbar ist und zudem ein geringeres Risiko gegen Deformationen während der Herstellung aufweist. Aufgabe ist es auch, ein Verfahren zur Herstellung eines Dampferzeugerflüssigkeitsabscheiders anzugeben.

Die Aufgabe wird gelöst durch einen Dampferzeugerwasserabscheider bzw. Dampferzeugerwasserabscheider für einen vertikal mit Dampf durchströmten Dampferzeuger, wobei eine Anzahl von Drallblechen um eine Achse in einem Rohrstück angeordnet ist, wobei jedes Drallblech mit der Achse und dem Rohrstück verbunden ist, wobei die Drallbleche so geformt sind, dass ein Dampfstrom durch das Rohrstück zusätzlich zu seiner Längsbewegung durch das Rohrstück in eine Rotationsbewegung versetzt ist. Der Dampferzeugerwasserabscheider ist dadurch gekennzeichnet, dass das Rohrstück mehrere Rohrteilstücke aufweist, dass die Achse mehrere Achsteilstücke aufweist, dass jedes Drallblech mit einem Rohrteilstück und mit einem Achsteilstück zu einem Wasserabscheiderteilstück verbunden ist, dass die Achsteilstücke mit einen Achsteilstückhalter formschlüssig lösbar verbunden sind, und dass durch das formschlüssige Verbinden an ihrer konstruktiv vorgesehenen Position gehalten sind.

Der Grundgedanke der Erfindung besteht also darin, die Drallbleche nicht mehr wie seither an einer bestehende Rohrwand anzubringen, was die vorstehend genannten Nachteile hat. Nunmehr ist jedes Prallblech bereits mit einem Rohrteilstück und mit einem Achsteilstück verbunden. Sind dann die Achsteilstücke an ihrem Achsteilstückhalter angebracht, fügen sich die Rohrteilstücke zu dem Rohrstück zusammen. Hierdurch ist vorteilhafterweise das zeitaufwendige Positionieren und Fixieren, zum Beispiel durch ein Anheften der Drallbleche an die Rohrwand, vermieden. Das ist insbesondere dann von Vorteil, wenn der Dampferzeugerwasserabscheider auf einer Baustelle und nicht in einer Werkstatt hergestellt wird. Ganz besonders vorteilhaft ist es, wenn die Herstellung des Dampferzeugerwasserabscheiders in einer Austauschsituation sozusagen vor Ort erfolgt. D.h. wenn ein Flüssigkeitsabscheider bzw. ein Wasserabscheider in einem Dampferzeuger ausgetauscht werden muss, und ein neuer Flüssigkeitsabscheider den verschlissenen alten ersetzt. In der Regel kann der Dampferzeugerwasserabscheider dann nicht als komplette Einheit in den Dampferzeuger verbracht werden, da die Abmessungen eines Dampferzeugerwasserabscheiders in der Regel zu groß für den Zugang zu einem Dom des Dampferzeugers sind, beispielsweise für den Zugang durch ein Mannloch. Ein Drallblech mit einem bereits daran angebrachten Rohrteilstück und einem daran angebrachten Achsteilstück ist so dimensioniert, dass es durch ein Mannloch des betreffenden Dampferzeugers passt. Im Dom innerhalb des Dampferzeugers werden die einzelnen Drallbleche mit ihren Achsteilstücken mit dem Achsteilstückhalter formschlüssig lösbar verbunden. Damit ist aus den Rohrteilstücken aber auch ein Rohrstück geformt. Somit ist auf besonders einfache Weise ein Dampferzeugerwasserabscheider hergestellt, der bereits in einem Rohrstück positioniert ist. Demgemäß ist die Herstellungszeit für einen Dampferzeugerwasserabscheider erheblich reduziert. Zudem ist das händische Positionieren der Drallbleche an der Rohrwand vermieden, so dass eine qualitätsmindernde Deformation durch eine vor Ort Schweißung der Drallbleche an eine Rohrwand im Dampferzeuger vermieden ist.

Besonders vorteilhaft ist der Dampferzeugerwasserabscheider dann eingesetzt, wenn er als Austauschdampferzeugerwasserabscheider in einer personengefährdeten Umgebung ausgetauscht wird, beispielsweise in einem Kernkraftwerksdampferzeuger. Dort dürfen sich Personen nur eine begrenzte Zeit aufhalten, so dass ein möglichst schnelles Herstellen und ein schneller Austausch des Dampferzeugerwasserabscheiders, hier also ein Kernkraftdampferzeugerwasserabscheider, erfolgen.

Eine Weiterbildung des Dampferzeugerwasserabscheider sieht vor, dass ein erstes Abschlusselement mit einer ersten Stirnseite des Achsteilstückhalters und ein zweites Abschlusselement mit einer zweiten Stirnseite des Achsteilstückhalters verbunden sind, dass jedes Abschlusselement eine kreisförmige Nut aufweist, deren offene Seite in Richtung der jeweiligen Stirnseite weist, dass eine jeweils radial äußere Nutwand der Nuten einen Teilbereich der Achsteilstücke übergreift. Hierbei ist es vorteilhaft, dass die einzelnen axialen Enden der Achsteilstücke einer Stirnseite in einer Nut eines Abschlusselements gelegen sind. Damit übergreift die axial äußere Nutwand die axialen Enden. Auf diese Weise sind die axialen Enden besonders gut vor einer Krafteinwirkung einer Dampfströmung durch den Dampferzeugerwasserabscheider geschützt. Der Verschleiß ist entsprechend minimiert.

Eine besonders einfache Art die Abschlusselemente mit den Stirnseiten zu verbinden ist, dadurch gekennzeichnet, dass die Abschlusselemente in die Stirnseite des Achsteilstückhalters einschraubt sind. Dazu weist ein Abschlusselement beispielsweise ein Außengewinde auf, das in ein entsprechendes Innengewinde am Achsteilstückhalter eingeschraubt wird.

Eine weitere Alternative des Dampferzeugerwasserabscheiders ist dadurch gekennzeichnet, dass jedes Achsteilstück eine Anformung aufweist, dass der Achsteilstückhalter Führungsnuten aufweist, die in Längsrichtung des Achsteilstückhalter auf dessen radial äußeren Oberfläche angeordnet sind, und dass durch jeweils eine Anformung-Führungsnut-Kombination eine formschlüssige Verbindung zwischen jedem Achsteilstück und dem Achsteilstückhalter hergestellt ist. Auf diese Weise ist ein besonders einfaches formschlüssiges Verbinden zwischen den Achsteilstücken und dem Achsteilstückhalter möglich. Bevorzugte formschlüssige Formen sind beispielsweise schwalbenschwanzförmige oder pilzkopfförmige Nuten im Achsteilstückhalter mit einer entsprechend geformten Anformungen an den Achsteilstücken. Es ist auch innerhalb des Erfindungsgedankens, dass die Nuten beziehungsweise die Anformungen auch an dem jeweils anderen Bauteil angeordnet sind, um eine solche Anformung-Führungsnut-Kombination herzustellen.

Eine weitere Variante des Dampferzeugerwasserabscheiders sieht vor, dass benachbarte Bauelemente der Bauelemente Achsteilstücke, Rohrteilstücke, Achsteilstückhalter und/oder Abschlusselemente durch Sicherungsmittel in ihrer Position unlösbar miteinander verbunden sind. Die Verbindung von zwei benachbarten Bauelementen zur Sicherung von deren Position oder zur Sicherung gegen ein Lösen des Bauelements aus seiner Position ist mit einer Vielzahl von technischen Möglichkeiten zu realisieren, beispielsweise durch Schweißpunkte, Schweißnähte, Kleben, Bolzen oder Niete. Eine besonders einfache und zeitsparende sowie zugleich sichere Sicherungsmöglichkeit für die Verwendung in einer Austauschsituation oder innerhalb eines Dampferzeugers ist das Setzen von Schweißpunkten oder Schweißnähten, die zwei benachbarte Bauelemente miteinander verbinden.

Die Aufgabe wird auch gelöst durch einen Dampferzeuger, der vertikal mit Dampf durchströmt ist, mit einem Primärwasserabscheider, der in einem geodätisch gesehen oberen Dombereich angeordnet ist, wobei der Primärwasserabscheider eine Anzahl vertikal verlaufender Rohrstücke aufweist, wobei in wenigstens einigen der Rohrstücke ein Dampferzeugerwasserabscheider nach einem der vorherigen Ansprüche angeordnet ist. Der Dampferzeuger gibt eine spezifische Einbausituation für den Dampferzeugerwasserabscheider vor, insbesondere in einem Kernkraftwerk. Das bedeutet, dass die Herstellung des Dampferzeugerwasserabscheiders nur in den beengten räumlichen Verhältnissen des Doms des Dampferzeugers erfolgt. Demgemäß sind die vorstehend beschriebenen Vorteile bei der Herstellung des Dampferzeugerwasserabscheiders innerhalb eines Dampferzeugerdoms von besonderer Bedeutung.

Für eine besonders einfache Herstellung des Dampferzeugers mit einem Dampferzeugerwasserabscheider ist es vorgesehen, dass der Dombereich ein Mannloch aufweist, dass die Abmessungen und die Gestalt der Bauelemente Achsteilstücke, Rohrteilstücke, Achsteilstückhalter oder/und Abschlusselemente auf eine lichte Weite des Mannlochs angepasst sind, so dass diese Bauelemente von außerhalb des Dombereiches in den Dombereich einbringbar sind. Auf diese Weise kann mit nur wenigen in einer Werkstatt mit einer entsprechenden Präzision vorgefertigten Bauelementen ein Dampferzeugerwasserabscheider hergestellt und in seine vorgesehene Einbaustelle im Dampferzeuger eingebracht werden.

Eine bevorzugte Variante des Dampferzeugers ist der Einsatz als Kernkraftwerkdampferzeuger.

Die Aufgabe wird zudem gelöst durch ein Verfahren zum Herstellen eines erfindungsgemäßen Dampferzeugerwasserabscheiders, umfassend folgende Verfahrensschritte
- Verbinden des ersten Abschlusselements mit dem Achsteilstückhalter
- Formschlüssiges Verbinden der Achsteilstücke der Wasserabscheiderteilstücke mit dem Achsteilstückhalter, so dass durch die Rohrteilstücke das Rohrstück ausgestaltet ist und so dass die Drallbleche an ihren konstruktiv vorgesehen Positionen angeordnet sind,
- Verbinden des zweiten Abschlusselements mit dem Achsteilstückhalter, so dass die axialen Positionen der Achsteilstücke zwischen dem ersten und dem zweiten Abschlusselement fixiert sind.

Auf diese Weise wird mit nur wenigen erfindungsgemäßen Verfahrensschritten ein Dampferzeugerwasserabscheider besonders einfach und schnell hergestellt. Insbesondere bei einer vor Ort Herstellung, also einer Herstellung, die nicht in einer Werkstattumgebung erfolgt, sichern die erfindungsgemäßen Verfahrensschritte eine hohe Qualität eines Dampferzeugerwasserabscheider, während die Drallbleche zudem keinem oder nur einem geringen Risiko der Deformation oder Fehlpositionierung der Drallbleche wäre der Herstellung ausgesetzt sind.

Das erfindungsgemäße Verfahren zum Herstellen eines Dampferzeugerwasserabscheiders kann auch folgenden sich anschließenden Zusatzverfahrensschritt umfassen:
- Anbringen der Sicherungsmittel jeweils an benachbarte Bauelemente der Bauelemente Achsteilstücke, Rohrteilstücke, Achsteilstückhalter und/oder Abschlusselemente.

Bei dieser Verfahrensvariante sind durch die Sicherungsmittel die Position und die Verbindung von benachbarten Bauelementen zusätzlich sichergestellt.

So kann beim Verfahren zum Herstellen eines Dampferzeugerwasserabscheiders die Sicherung dadurch erfolgen, dass durch Schweißpunkte oder Schweißnähte als Sicherungsmittel jeweils benachbarte Bauelemente der Bauelemente Achsteilstücke, Rohrteilstücke, Achsteilstückhalter und/oder Abschlusselemente miteinander verbunden werden.

Eine weitere Verfahrensvariante zum Herstellen eines Dampferzeugerwasserabscheiders in einem Dombereich eines Dampferzeugers sieht folgenden Zusatzschritt vor:
- Einführen der Bauelemente Achsteilstücke, Rohrteilstücke, Achsteilstückhalter und/oder Abschlusselemente durch das Mannloch in den Dombereich.

Diese Verfahrensvariante zielt auf das Herstellen eines Dampferzeugerwasserabscheiders in einer speziellen Einbausituation ab, die in der Regel möglichst schnell erfolgen muss, wobei die Qualität des Dampferzeugerwasserabscheiders nicht leiden darf.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: eine Explosionszeichnung eines Ausführungsbeispiels eines Wasserabscheiders,
- Fig. 2: eine 3-D Zeichnung auf den zusammengebauten Wasserabscheider sowie
- Fig. 3: ein Schnittbild durch einen Dampferzeuger mit eingebauten Wasserabscheidern.

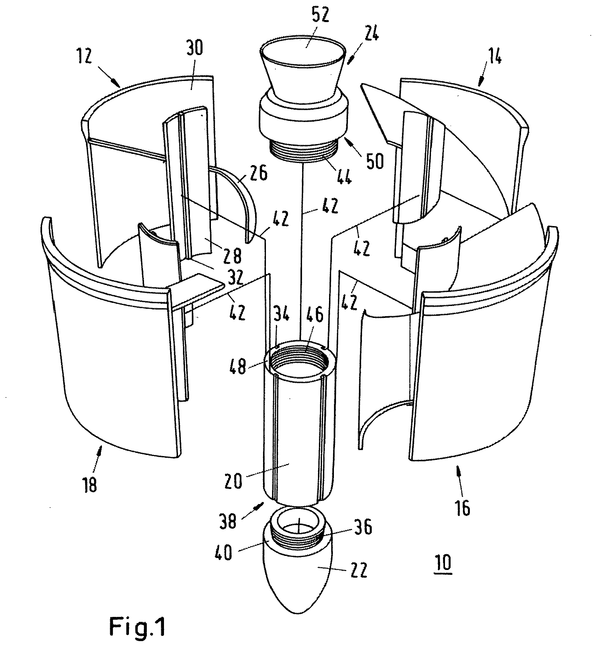

Fig. 1 zeigt eine Explosionszeichnung eines Wasserabscheiders 10 als Ausführungsbeispiel für einen Dampferzeugerflüssigkeitsabscheider, der zum Einbau als Austauschflüssigkeitsabscheider in einen Primärdampferzeuger eines Kernkraftwerks gedacht ist. Das durch den Dampferzeuger strömende flüssige Medium ist im gewählten Beispiel Wasser, welches während des Durchströmens des Dampferzeugers zu Wasserdampf als Dampf erhitzt wird. Der gezeigte Wasserabscheider 10 weist ein erstes 12, ein zweites 14, ein drittes 16 sowie ein viertes Wasserabscheiderteilstück 18 auf, die alle einen gleichartigen Aufbau aufweisen. Die Wasserabscheiderteilstück 12, 14, 16, 18 sind symmetrisch um einen Halter angeordnet, dessen Mittelachse in Längsrichtung auf einer gedachten Symmetrieachse des Wasserabscheiders 10 gelegen ist. Der Halter weist dabei einen Achsteilstückhalter 20, ein erstes Abschlusselement 22 sowie ein zweites Anschlusselement 24 auf.

Der Aufbau eines Wasserabscheiderteilstücks soll exemplarisch am ersten Wasserabscheiderteilstück 12 im Folgenden näher erläutert werden.

Das erste Wasserabscheiderteilstück 12 hat ein gebogenes erstes Drallblech 26, an dem an seiner zum Achsteilstückhalter 20 weisenden Seite ein erstes Achsteilstück 28 angebracht ist. Ein erstes Rohrteilstück 30 ist an der dem Achsteilstückhalter 20 abgewandten Seite mit dem ersten Drallblech 26 verbunden. Im gewählten Ausführungsbeispiel weißt der Wasserabscheider 10 genau vier Wasserabscheiderteilstücke auf, die einen gleichen Aufbau haben mit Rohrteilstücken 30, Drallblechen 26 und Achsteilstücken 28. Die vier Rohrteilstücke 28 ergeben nach dem Zusammensetzen des Wasserabscheiders 10 ein komplettes Rohrstück. Im Ausführungsbeispiel hat jedes Rohrteilstück 30 einen Umfangsanteil an Rohrwand am Rohrstück von einem Viertel beziehungsweise 90°. Im gewählten Beispiel haben auch die Achsteilstücke 28 einen Umfangsanteil von einem Viertel beziehungsweise 90° und bilden im zusammengesetzten Zustand ein Achsrohrstück. Das erste Achsteilstück 28 weist auf seiner zum Achsteilstückhalter 20 weisenden Seite eine schwalbenschwanzförmige Anformung 32 auf, die über die komplette Länge einer Längserstreckung des ersten Achsteilstück 28 des ersten Wasserabscheiderteilstücks 12 ausgebildet ist. Im Achsteilstückhalter 20 sind in seiner Längserstreckung insgesamt vier schwalbenschwanzförmige Nuten eingebracht, deren Abmessungen auf die Anformungen an den Achsteilstücken angepasst sind. So ist beispielsweise die erste Anformungen 32 in eine erste Nut in Längsrichtung einschiebbar und derart formschlüssig mit dem Achsteilstückhalter 20 verbunden. Der Vorgang des Einschiebens der Anformungen in die Nuten ist in dieser Figur in Form von mehreren Linien 42 angedeutet. Dabei sind die Längen des Achsteilstückhalters 20 und der Achsteilstücke 28 aufeinander abgestimmt, also im gewählten Beispiel gleich lang.

Zudem weist das erste Abschlusselement 22 auf seiner zum Achsteilstückhalter 20 weisenden Stirnseite ein Gewinde 36 auf, dass in ein entsprechendes Gegengewinde auf einer ersten Stirnseite 38 des Achsteilstückhalters 20 einschraubbar ist. Das Gegengewinde ist in dieser Ansicht jedoch nicht erkennbar. Zudem ist auf der ersten Stirnseite 38 eine erste Rundnut 40 in das Material des ersten Anschlusselements 22 eingearbeitet, wobei die lichte Breite der ersten Rundnut 40 auf die radiale Dicke des Materials der Achsteilstücke angepasst ist. Auf diese Weise wird der Bereich der Achsteilstücke, der nach dem Zusammenbau in der Rundnut angeordnet ist, positioniert und fixiert. Eine andere Stirnseite des ersten Abschlusselements 22 ist mit einer strömungsgünstigen Form ausgestaltet, so dass Dampf, der auf die andere Stirnseite auftrifft mit möglichst minimalen Druckverlusten um das erste Abschlusselement 22 und den Halter insgesamt herumgeleitet wird.

Zudem weist das zweite Abschlusselement 24 auf seiner zum Achsteilstückhalter 20 weisenden Stirnseite ein Außengewinde 44 auf, dass in ein Innengewinde 46 in einer zweiten Stirnseite 48 des Achsteilstückhalters 20 einschraubbar ist. Auf dieser Stirnseite des zweiten Abschlusselements 24 ist eine zweite Rundnut 50 eingebracht, die eine vergleichbare Ausgestaltung und Funktion wie die erste Rundnut 40 hat. Auch in der zweiten Rundnut 50 sind die dort im zusammengebauten Zustand des Wasserabscheiders 10 gelegenen Bereiche der Achsteilstücke 28 positioniert und fixiert. Eine weitere Stirnseite des zweiten Abschlusselements 24 ist als die Diffusorelement 52 ausgestaltet, was in einer weiteren Minimierung des Druckverlustes im Dampfstrom über den Wasserabscheider 10 resultiert.

Das erste 22 und das zweite Abschlusselement 24 fixieren alle Wasserabscheiderteilstücke 12, 14, 16, 18 in einer konstruktiv vorgegebenen axialen und radialen Position am beziehungsweise auf dem Achsteilstückhalter 20.

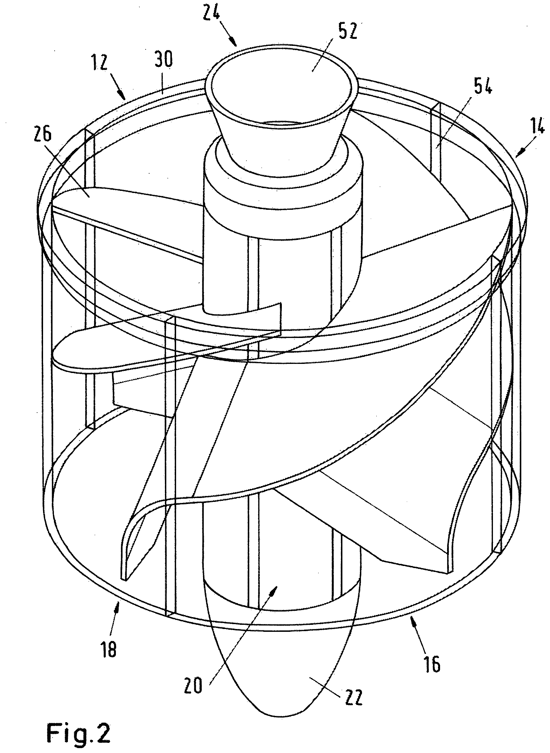

Fig. 2 zeigt eine 3-D Ansicht auf den zusammengebauten Wasserabscheider 10, weshalb für die gleichen Bauteile dieselben Bezugszeichen verwendet werden wie in der Beschreibung zur Fig. 1. In der Fig. 2 ist gut zu erkennen, dass die Rohrteilstücke 30 der einzelnen Wasserabscheiderteilstücke 12, 14, 16, 18 insgesamt ein Rohrstück ergeben, in dem die Drallbleche 26 angeordnet sind. Aus der Figur ist auch ersichtlich, dass benachbarte Bauelemente, beispielsweise das erste Rohrteilstück 30 des ersten Wasserabscheiderteilstücks 12 und das benachbarte Rohrteilstück 30 des zweiten Wasserabscheiderteilstücks 14 eine gemeinsame Stoßfläche 54 ausbilden, an der sie sich flächig berühren und an der die beiden Bauteile mittels einer Schweißnaht als Sicherungsmittel zusammenschweißbar sind.

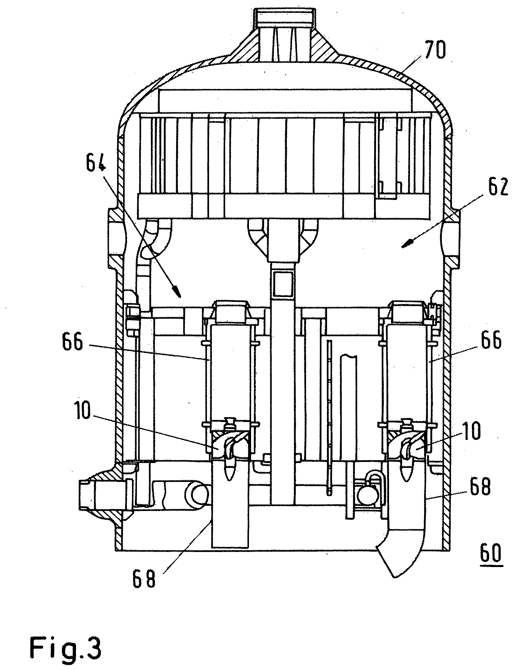

Fig. 3 zeigt ein Schnittbild durch einen geodätisch oberen Teil eines Dampferzeugers 60 im Primärkühlkreislauf eines Kernkraftwerks mit eingebauten Wasserabscheidern 10. Im gezeigten Beispiel hat der Dampferzeuger eine Höhe von ca. 17 m sowie einen Durchmesser von ca. 4 m und wird von unten nach oben mit einem Kühlmedium, nämlich Wasser, durchströmt. Im Zuge des Durchströmens wird das Kühlmedium erhitzt und geht in Dampfphase über. In der Figur ist lediglich ein oberer Teil des Dampferzeugers 60, ein so genannter Dom, Dombereich oder Dampferzeugerdom 62, gezeigt, in dem das Kühlmedium bereits in der Dampfphase ist. Im Dampferzeugerdom 62 ist ein zweistufiger Primärwasserabscheider 64 gezeigt, der mehrere vertikal angeordnete erste Rohre 66 hat, von denen zwei im Schnittbild zu sehen sind. In jedem der ersten Rohre 66 ist ein Wasserabscheider 10 als erfindungsgemäßer Dampferzeugerflüssigkeitsabscheider als zweite Stufe des zweistufigen Primärwasserabscheiders 64 eingebracht. Dazu ist ein stirnseitiges Ende des Rohrstücks des Wasserabscheiders 10 mit einem stirnseitigen Ende eines zweiten Rohres 68 verbunden, beispielsweise verschweißt. Zudem ist ein äußerer Durchmesser des zweiten Rohres 68 sowie des Wasserabscheiders 10 kleiner, im gewählten Beispiel 800 Millimeter, typischerweise jedoch zwischen 600 mm und 1100 mm, als ein lichter Durchmesser des ersten Rohrs 66. auf diese Weise ist das zweite Rohr 68 mit dem darauf angebrachten Wasserabscheider 10 von unten in das erste Rohr 66 einschiebbar und zwar bis zu einer Position, in der das Rohrstück des Wasserabscheiders 10 vollständig in dem ersten Rohr 66 gelegen ist. Für beispielsweise Reparatur- oder Wartungsarbeiten ist der Dampferzeugerdom 62 zugänglich, indem in einer Dampferzeugerwand 70 ein Mannloch eingearbeitet ist, dass in der Figur jedoch nicht gezeigt ist. Das Mannloch ist durch einen Mannlochverschluss während der normalen Betriebszeit des Dampferzeugers 60 verschlossen, kann jedoch zu besagten Reparatur- oder Wartungsarbeiten zeitweise geöffnet werden. Ein typischer Durchmesser für ein solches Mannloch sind 500 mm bis 600 mm.

Eine möglicherweise erforderliche Reparaturarbeit am Dampferzeuger 60 ist der Austausch des oder der Wasserabscheiders 10. Nach einer bestimmten Betriebsbetriebszeit kann es vorkommen, dass durch die Beaufschlagung des Wasserabscheiders durch Dampf und durch Wassertröpfchen das Material des Wasserabscheiders verschleißt beziehungsweise abgetragen wird, so dass der Wasserabscheider zerstört werden kann oder zumindest in seiner Funktion eingeschränkt wird. Der Austausch des ursprünglichen Wasserabscheiders mit einem Wasserabscheider 10 ist jedoch oft nicht ohne weiteres möglich, da ein äußerer Durchmesser des Austauschwasserabscheiders als Wasserabscheider 10 größer ist als der lichte Durchmesser des Mannlochs, durch das der Wasserabscheider 10 in den Dampferzeugerdom gelangen müsste. Für diesen Einsatzfall eines Dampferzeugerersatzflüssigkeitsabscheiders ist der erfindungsgemäße Wasserabscheider 10 besonders geeignet und wird wie folgt in den Dampferzeuger 60 eingebaut. Dabei kann als Material für den Wasserabscheider 10 ein widerstandsfähigeres Material gewählt werden, als das des ursprünglichen Wasserabscheiders, beispielsweise Edelstahl oder hochlegierte Sonderstähle mit einem vergleichsweise hohen Anteil an Chrom, Vanadium oder anderen Metallen. Zudem kommt zur Erhöhung des Widerstandes des Wasserabscheiders 10 gegen Verschleiß auch das Plattieren der Bauelemente und insbesondere der Drallbleche 26 beispielsweise mit austenitischen Stählen in Betracht. Als weitere Alternative zur Erhöhung des Widerstandes des Wasserabscheiders 10 gegen Verschleiß ist auch das Plasmabeschichten Plattieren der Bauelemente und insbesondere der Drallbleche 26 vorgesehen.

Dabei wird angenommen, dass der ursprüngliche Wasserabscheider, der aufgrund seines Verschleißzustandes aus dem Dampferzeugerdom entfernt werden muss, beispielsweise mit einem Trennverfahren, wie dem Sägen, Trennschweißen oder Abflexen des ursprünglichen Wasserabscheiders vom zweiten Rohr 68 sowie dem Heraustrennen des ursprünglichen Wasserabscheiders aus dem ersten Rohr 66. der ursprüngliche Wasserabscheider wird dann noch zerkleinert, so dass die einzelnen Teilstücke durch das Mannloch aus den Dampferzeugerdom 62 hinausgebracht werden können. Der neue Wasserabscheider 10 kann jedoch nicht in einem zusammengebauten Zustand in den Dampferzeugerdom 62 eingebracht werden. Der Durchmesser des Wasserabscheiders 10 ist nämlich größer als die lichte Weite des Mannlochs. Erfindungsgemäß weißt der Wasserabscheider 10 jedoch mehrere Bauelemente auf, im gezeigten Beispiel sind es 7 Bauelemente, die jeweils lediglich solche Abmessungen haben, die durch das Mannloch hindurch bewegt werden können. Auf diese Weise werden zunächst alle erforderlichen Bauelemente des Wasserabscheiders 10 durch das Mannloch in den Dampferzeugerdom 62 eingebracht. Dort wird in einem ersten Arbeitsschritt zunächst das erste Abschlusselement 22 mit seinem Gewinde 36 in das Gegengewinde des Achsteilstückhalters 20 eingeschraubt. In einem weiteren Arbeitsschritt wird das erste Wasserabscheiderteilstück 12 mit seiner ersten Anformung 32 in die freie Stirnseite der ersten Nut 34 eingeführt und soweit in der ersten Nut 34 verschoben, bis das erste Achsteilstück 28 in einem Nutgrund der Rundnut 40 anschlägt. Dieser Arbeitsschritt wird für das zweite 14, das dritte 16 sowie das vierte Wasserabscheiderteilstück 18 wiederholt, bis diese in den ihnen zugeordneten weiteren Nuten 34 beziehungsweise Längsnuten im Achsteilstückhalter 20 angeordnet sind und derart mit diesem formschlüssig verbunden sind. In einem zusätzlichen Arbeitsschritt wird das zweite Abschlusselement 24 mit seinem Außengewinde 44 in das Innengewinde 46 des Achsteilstückhalters 20 eingeschraubt, bis ein Nutgrund der zweiten Rundnut 50 gegen die Achsteilstücken 28 verspannt ist. Auf diese Weise sind die einzelnen Achsteilstücke zwischen dem ersten 22 und dem zweiten Abschlusselement 24 an ihren konstruktiv vorgesehenen Positionen gehalten und ortsfest verspannt. Im gezeigten Beispiel werden in einem folgenden Arbeitsschritt alle benachbarten Bauteile miteinander durch Schweißnähte verschweißt, also unlösbar miteinander verbunden. So werden beispielsweise die sich berührenden Seiten des ersten 30 mit einem zweiten Rohrteilstück mit einer Schweißnaht verbunden oder auch das erste Abschlusselement 22 mit dem ersten Achsteilstück 28 mit einer Schweißnaht verschweißt.

### Bezugszeichenliste

- 10: Wasserabscheider
- 12: erstes Wasserabscheiderteilstück
- 14: zweites Wasserabscheiderteilstück
- 16: drittes Wasserabscheiderteilstück
- 18: viertes Wasserabscheiderteilstück
- 20: Achsteilstückhalter
- 22: erstes Abschlusselement
- 24: zweites Abschlusselement
- 26: erstes Drallblech
- 28: erstes Achsteilstück
- 30: erstes Rohrteilstück
- 32: erste Anformung
- 34: erste Nut
- 36: Gewinde
- 38: erste Stirnseite
- 40: Rundnut
- 42: Linien
- 44: Außengewinde
- 46: Innengewinde
- 48: zweite Stirnseite
- 50: zweite Rundnut
- 52: Diffusorelement
- 54: Stoßfläche
- 60: Dampferzeuger
- 62: Dampferzeugerdom
- 64: Primärwasserabscheider
- 66: erste Rohre
- 68: zweite Rohre
- 70: Dampferzeugerwand

## Patentansprüche

1. Dampferzeugerflüssigkeitsabscheider (10) für einen vertikal mit Dampf durchströmten Dampferzeuger (60), wobei eine Anzahl von Drallblechen (26) um eine Achse in einem Rohrstück angeordnet ist, wobei jedes Drallblech (26) mit dem Rohrstück verbunden ist, wobei die Drallbleche (26) so geformt sind, dass ein Dampfstrom durch das Rohrstück zusätzlich zu seiner Längsbewegung durch das Rohrstück in eine Rotationsbewegung versetzt ist,
**dadurch gekennzeichnet,**
**dass** das Rohrstück mehrere Rohrteilstücke (30) aufweist, dass eine Achse mehrere Achsteilstücke (28) aufweist, dass jedes Drallblech (26) mit einem Rohrteilstück (30) und mit einem Achsteilstück (28) zu einem Flüssigkeitsabscheiderteilstück (12, 14, 16, 18) verbunden ist, dass die Achsteilstücke (28) mit einen Achsteilstückhalter (20) formschlüssig lösbar verbunden sind, und dass die Achsteilstücke (28) durch das formschlüssige Verbinden an ihrer konstruktiv vorgesehenen Position gehalten sind.

2. Dampferzeugerflüssigkeitsabscheider (10) nach Anspruch 1, wobei ein erstes Abschlusselement (22) mit einer ersten Stirnseite (38) des Achsteilstückhalters (20) und ein zweites Abschlusselement (24) mit einer zweiten Stirnseite (48) des Achsteilstückhalters (20) verbunden sind, wobei jedes Abschlusselement (22, 24) eine kreisförmige Nut (40, 50) aufweist, deren offene Seite in Richtung der jeweiligen Stirnseite (38, 48) weist, wobei eine jeweils radial äußere Nutwand der kreisförmigen Nuten (40, 50) einen Teilbereich der Achsteilstücke (28) übergreift.

3. Dampferzeugerflüssigkeitsabscheider (10) nach Anspruch 2, wobei die Abschlusselemente (22, 24) in die Stirnseiten (38, 48) des Achsteilstückhalters (20) einschraubt sind.

4. Dampferzeugerflüssigkeitsabscheider (10) nach einem der vorherigen Ansprüche, wobei jedes Achsteilstück (28) eine Anformung (32) aufweist, wobei der Achsteilstückhalter (20) Führungsnuten (34) aufweist, die in Längsrichtung des Achsteilstückhalter (20) auf dessen radial äußeren Oberfläche angeordnet sind, und wobei durch jeweils eine Anformung-Führungsnut-Kombination eine formschlüssige Verbindung zwischen jedem Achsteilstück (28) und dem Achsteilstückhalter (20) hergestellt ist.

5. Dampferzeugerflüssigkeitsabscheider (10) nach einem der vorherigen Ansprüche, wobei benachbarte Bauelemente der Bauelemente Achsteilstücke (28), Rohrteilstücke (30), Achsteilstückhalter (20) und/oder Abschlusselemente (22, 24) durch Sicherungsmittel in ihrer Position unlösbar miteinander verbunden sind.

6. Dampferzeuger (60), der vertikal mit Dampf durchströmt ist, mit einem Primärwasserabscheider (64), der in einem geodätisch gesehen oberen Dampferzeugerdom (62) angeordnet ist, wobei der Primärwasserabscheider (64) eine Anzahl vertikal verlaufender Rohrstücke aufweist, wobei in wenigstens einigen der Rohrstücke ein Dampferzeugerflüssigkeitsabscheider (10) nach einem der vorherigen Ansprüche angeordnet ist.

7. Dampferzeuger (60) nach Anspruch 6, wobei der Dampferzeugerdom (62) ein Mannloch aufweist, wobei die Abmessungen und die Gestalt der Bauelemente Achsteilstücke (28), Rohrteilstücke (30), Achsteilstückhalter (20) und/oder Abschlusselemente (22, 24) auf eine lichte Weite des Mannlochs angepasst sind, so dass diese Bauelemente von außerhalb des Dampferzeugerdoms (62) in diesen einbringbar sind.

8. Dampferzeuger (60) nach Anspruch 6 oder 7, wobei dieser ein Primärdampferzeuger eines Kernkraftwerks ist.

9. Verfahren zum Herstellen eines Dampferzeugerflüssigkeitsabscheider (10) gemäß einem der Ansprüche 1-5, umfassend folgende Verfahrensschritte
• Verbinden des ersten Abschlusselements (22) mit dem Achsteilstückhalter (20)
• Formschlüssiges Verbinden der Achsteilstücke (28) der Flüssigkeitsabscheiderteilstücke (12, 14, 16, 18) mit dem Achsteilstückhalter (20), so dass durch die Rohrteilstücke (30) das Rohrstück ausgestaltet ist und so dass die Drallbleche (26) an ihren konstruktiv vorgesehen Positionen angeordnet sind, sowie
• Verbinden des zweiten Abschlusselements (24) mit dem Achsteilstückhalter (20), so dass die axialen Positionen der Achsteilstücke (28) zwischen dem ersten (22) und dem zweiten Abschlusselement (24) fixiert sind.

10. Verfahren zum Herstellen eines Dampferzeugerflüssigkeitsabscheiders (10) nach Anspruch 9, umfassend folgenden sich anschließenden Zusatzverfahrensschritt:
• Anbringen von Sicherungsmitteln jeweils an benachbarte Bauelemente der Bauelemente Achsteilstücke (28), Rohrteilstücke (30), Achsteilstückhalter (20) und/oder Abschlusselemente (22, 24).

11. Verfahren zum Herstellen eines Dampferzeugerflüssigkeitsabscheiders (10) nach Anspruch 10, wobei durch Schweißpunkte oder Schweißnähte als Sicherungsmittel jeweils benachbarte Bauelemente der Bauelemente Achsteilstücke (28), Rohrteilstücke (30), Achsteilstückhalter (20) und/oder Abschlusselemente (22, 24) miteinander verbunden werden.

12. Verfahren zum Herstellen eines Dampferzeugerflüssigkeitsabscheiders (10) nach einem der Ansprüche 9 bis 11 in einem Dampferzeugerdom (62), umfassend folgende Zusatzschritte:
• Einführen der Bauelemente Achsteilstücke (28), Rohrteilstücke (30), Achsteilstückhalter (20) und/oder Abschlusselemente (22, 24) durch ein Mannloch in den Dampferzeugerdom (62).

## Claims

1. Steam boiler liquid separator (10) for a steam boiler (60) through which steam flows vertically, wherein a number of swirl vanes (26) are arranged about a shaft in a pipe section, wherein each swirl vane (26) is connected to the pipe section, wherein the swirl vanes (26) are shaped such that a rotational movement is imparted to a flow of steam through the pipe section in addition to its longitudinal movement through the pipe section,
**characterized**
**in that** the pipe section has a plurality of pipe segments (30), in that a shaft has a plurality of shaft segments (28), in that each swirl vane (26) is connected to a pipe segment (30) and to a shaft segment (28) to form a liquid separator segment (12, 14, 16, 18), in that the shaft segments (28) are connected positively and detachably to a shaft segment holder (20), and in that the shaft segments (28) are held in their structurally intended position by the positive connection.

2. Steam boiler liquid separator (10) according to Claim 1, wherein a first closure element (22) is connected to a first end face (38) of the shaft segment holder (20) and a second closure element (24) is connected to a second end face (48) of the shaft segment holder (20), wherein each closure element (22, 24) has a circular groove (40, 50) with its open side facing the respective end face (38, 48), wherein a respective radially outer groove wall of the circular grooves (40, 50) engages over a subzone of the shaft segments (28).

3. Steam boiler liquid separator (10) according to Claim 2, wherein the closure elements (22, 24) are screwed into the end faces (38, 48) of the shaft segment holder (20).

4. Steam boiler liquid separator (10) according to one of the preceding claims, wherein each shaft segment (28) has a moulding (32), wherein the shaft segment holder (20) has guide grooves (34) which are arranged in the longitudinal direction of the shaft segment holder (20) on the radially outer surface of the latter, and wherein a positive connection is produced between each shaft segment (28) and the shaft segment holder (20) by a respective moulding/guide groove combination.

5. Steam boiler liquid separator (10) according to one of the preceding claims, wherein adjacent components of the components shaft segments (28), pipe segments (30), shaft segment holders (20), and/or closure elements (22, 24) are connected to one another non-detachably in their position by securing means.

6. Steam boiler (60) through which steam flows vertically, with a primary water separator (64) which is arranged in an upper steam boiler dome (62), viewed geodetically, wherein the primary water separator (64) has a number of vertically extending pipe sections, wherein a steam boiler liquid separator (10) according to one of the preceding claims is arranged in at least some of the pipe sections.

7. Steam boiler (60) according to Claim 6, wherein the steam boiler dome (62) has a manhole, wherein the dimensions and the form of the components shaft segments (28), pipe segments (30), shaft segment holders (20), and/or closure elements (22, 24) are adapted to a clear width of the manhole such that these components can be introduced into the steam boiler dome (62) from outside the latter.

8. Steam boiler (60) according to Claim 6 or 7, wherein it is a primary steam boiler of a nuclear power plant.

9. Method for producing a steam boiler liquid separator (10) according to one of Claims 1-5, comprising the following method steps:
• connecting the first closure element (22) to the shaft segment holder (20)
• positively connecting the shaft segments (28) of the liquid separator segments (12, 14, 16, 18) to the shaft segment holder (20) such that the pipe section is formed by the pipe segments (30) and such that the swirl vanes (26) are arranged at their structurally intended positions, and
• connecting the second closure element (24) to the shaft segment holder (20) such that the axial positions of the shaft segments (28) between the first (22) and the second closure element (24) are fixed.

10. Method for producing a steam boiler liquid separator (10) according to Claim 9, comprising the following subsequent additional method step:
• attaching securing means in each case to adjacent components of the components shaft segments (28), pipe segments (30), shaft segment holders (20), and/or closure elements (22, 24).

11. Method for producing a steam boiler liquid separator (10) according to Claim 10, wherein respective adjacent components of the components shaft segments (28), pipe segments (30), shaft segment holders (20), and/or closure elements (22, 24) are connected to one another by spot welds or weld seams as the securing means.

12. Method for producing a steam boiler liquid separator (10) according to one of Claims 9 to 11 in a steam boiler dome (62), comprising the following additional steps:
• introducing the components shaft segments (28), pipe segments (30), shaft segment holders (20), and/or closure elements (22, 24) through a manhole into the steam boiler dome (62).

## Revendications

1. Séparateur de liquide de générateur de vapeur (10) pour un générateur de vapeur (60) traversé verticalement par de la vapeur, un nombre de plaques de tourbillonnement (26) étant agencées autour d'un axe dans une pièce tubulaire, chaque plaque de tourbillonnement (26) étant reliée à la pièce tubulaire, les plaques de tourbillonnement (26) étant formées de telle sorte qu'un écoulement de vapeur à travers la pièce tubulaire est mis dans un mouvement de rotation en plus de son mouvement longitudinal à travers la pièce tubulaire,
**caractérisé en ce que**
la pièce tubulaire présente plusieurs pièces partielles tubulaires (30), **en ce qu'**un axe présente plusieurs pièces partielles d'axe (28), **en ce que** chaque plaque de tourbillonnement (26) est reliée à une pièce partielle tubulaire (30) et à une pièce partielle d'axe (28) pour former une pièce partielle de séparateur de liquide (12, 14, 16, 18), **en ce que** les pièces partielles d'axe (28) sont reliés de manière amovible par complémentarité de forme à un support de pièce partielle d'axe (20), et **en ce que** les pièces partielles d'axe (28) sont maintenues par la liaison par complémentarité de forme dans leur position prévue par construction.

2. Séparateur de liquide de générateur de vapeur (10) selon la revendication 1, un premier élément d'extrémité (22) étant relié à un premier côté frontal (38) du support de pièce partielle d'axe (20) et un deuxième élément d'extrémité (24) étant relié à un deuxième côté frontal (48) du support de pièce partielle d'axe (20), chaque élément d'extrémité (22, 24) présentant une rainure circulaire (40, 50) dont le côté ouvert est dirigé en direction du côté frontal respectif (38, 48), une paroi de rainure respectivement radialement extérieure des rainures circulaires (40, 50) recouvrant une zone partielle des pièces partielles d'axe (28).

3. Séparateur de liquide de générateur de vapeur (10) selon la revendication 2, les éléments d'extrémité (22, 24) étant vissés dans les côtés frontaux (38, 48) du support de pièce partielle d'axe (20).

4. Séparateur de liquide de générateur de vapeur (10) selon l'une quelconque des revendications précédentes, chaque pièce partielle d'axe (28) présentant une saillie (32), le support de pièce partielle d'axe (20) présentant des rainures de guidage (34) qui sont agencées dans la direction longitudinale du support de pièce partielle d'axe (20) sur sa surface radialement extérieure, et une liaison par complémentarité de forme étant établie entre chaque pièce partielle d'axe (28) et le support de pièce partielle d'axe (20) par une combinaison respective saillie-rainure de guidage.

5. Séparateur de liquide de générateur de vapeur (10) selon l'une quelconque des revendications précédentes, des éléments de construction voisins des éléments de construction pièces partielles d'axe (28), pièces partielles tubulaires (30), support de pièce partielle d'axe (20) et/ou éléments d'extrémité (22, 24) étant reliés entre eux de manière inamovible dans leur position par des moyens de blocage.

6. Générateur de vapeur (60) traversé verticalement par de la vapeur, avec un séparateur d'eau primaire (64) agencé dans un dôme de générateur de vapeur (62) supérieur du point de vue géodésique, le séparateur d'eau primaire (64) présentant un nombre de pièces tubulaires s'étendant verticalement, dans au moins certaines des pièces tubulaires étant agencé un séparateur de liquide de générateur de vapeur (10) selon l'une quelconque des revendications précédentes.

7. Générateur de vapeur (60) selon la revendication 6, le dôme de générateur vapeur (62) présentant un trou d'homme, les dimensions et la forme des éléments de construction pièces partielles d'axe (28), pièces partielles tubulaires (30), supports de pièce partielle d'axe (20) et/ou éléments d'extrémité (22, 24) étant adaptées à une largeur libre du trou d'homme, de telle sorte que ces éléments de construction peuvent être introduits dans le dôme de générateur de vapeur (62) depuis l'extérieur de celui-ci.

8. Générateur de vapeur (60) selon la revendication 6 ou 7, celui-ci étant un générateur de vapeur primaire d'une centrale nucléaire.

9. Procédé de fabrication d'un séparateur de liquide de générateur de vapeur (10) selon l'une quelconque des revendications 1 à 5, comprenant les étapes de procédé suivantes :
- la liaison du premier élément d'extrémité (22) avec le support de pièce partielle d'axe (20),
- la liaison par complémentarité de forme des pièces partielles d'axe (28) des pièces partielles de séparateur de liquide (12, 14, 16, 18) au support de pièce partielle d'axe (20) de manière à ce que les pièces partielles tubulaires (30) forment la pièce tubulaire et que les plaques de tourbillonnement (26) soient agencées dans leurs positions prévues par construction, ainsi que
- la liaison du deuxième élément d'extrémité (24) au support de pièce partielle d'axe (20), de telle sorte que les positions axiales des pièces partielles d'axe (28) soient fixées entre le premier (22) et le deuxième élément d'extrémité (24).

10. Procédé de fabrication d'un séparateur de liquide de générateur de vapeur (10) selon la revendication 9, comprenant l'étape de procédé supplémentaire suivante :
- l'application de moyens de blocage respectivement à des éléments de construction voisins des éléments de construction pièces partielles d'axe (28), pièces partielles tubulaires (30), supports de pièce partielle d'axe (20) et/ou éléments d'extrémité (22, 24).

11. Procédé de fabrication d'un séparateur de liquide de générateur de vapeur (10) selon la revendication 10, des éléments de construction voisins des éléments de construction pièces partielles d'axe (28), pièces partielles tubulaires (30), supports de pièce partielle d'axe (20) et/ou éléments d'extrémité (22, 24) étant reliés entre eux par des points de soudure ou des joints de soudure en tant que moyens de blocage.

12. Procédé de fabrication d'un séparateur de liquide de générateur de vapeur (10) selon l'une quelconque des revendications 9 à 11 dans un dôme de générateur de vapeur (62), comprenant les étapes supplémentaires suivantes :
- l'introduction des éléments de construction pièces partielles d'axe (28), pièces partielles tubulaires (30), supports de pièce partielle d'axe (20) et/ou éléments d'extrémité (22, 24) dans le dôme de générateur de vapeur (62) par un trou d'homme.
